# EUROPEAN PATENT APPLICATION

(11) **EP 4 714 537 A1**
(43) Date of publication of application: **25.03.2026**
(21) Application number: 24202244.0
(22) Date of filing: 24.09.2024
(51) Int. Cl.: B01J 19/08, C01B 3/34

(54) **METHODS AND ASSOCIATED REACTORS AND SYSTEMS FOR PLASMA-BASED METHANE CONVERSION**

(71) Applicant: Universiteit Antwerpen, 2000 Antwerpen (BE)
(72) Inventor: BOGAERTS, Annemie, 2020 Antwerpen (BE); O'MODHRAIN, Colin, 2020 Antwerpen (BE)
(74) Representative: IPLodge bv

(57) **Abstract**

A method is disclosed for plasma-based conversion of methane in a plasma reactor, the plasma reactor (1) comprising a reaction chamber and an energy source to create the plasma in the reaction chamber, the reaction chamber being fluidly connected to a post-plasma reaction chamber, the plasma reactor comprising a gas inlet, the post-plasma reaction chamber comprising a gas outlet, the method comprising:
a) generating a plasma in the reaction chamber by activating the energy source;
b) providing a first gas flow comprising a CH₄ component through the gas inlet and into the reaction chamber, allowing conversion of the CH₄ component into gaseous H₂ and solid carbon and allowing the continuous removal of produced H₂ through the post-plasma reaction chamber and through the gas outlet;
c) in consideration of a solid carbon deposit being formed on a predetermined portion of an inner wall of the post-plasma reaction chamber, replacing the first gas flow with a second gas flow, the second gas flow comprising a COz component, allowing the oxidation of the deposited carbon, and allowing the continuous removal of produced CO through the gas outlet until the deposited carbon is substantially removed;
and associated reactors and reactor systems.

## Description

### Technical field

The present disclosure relates to methods and associated reactors and systems for plasma-based methane conversion, for instance, but not only, for the production of syngas.

### Background art

Plasma-based methane (CH₄) conversion has been intensely investigated as a potentially green hydrogen (H₂) production route. This H₂ can be used as a fuel directly or combined with carbon monoxide (CO) to form syngas, a key precursor for many industrial chemical processes. Pure plasma-based CH₄ conversion is typically limited by the formation of solid carbon, which can disrupt the discharge and interrupt the process.

As a solution, CH₄ is often diluted with a secondary gas, which may be an inert gas such as argon (Ar), which does not influence the products other than diluting the effluent stream. This increases the operation time of the reactor, but still results in the production of solid carbon which requires removal after time.

Another secondary discharge gas option is carbon dioxide (CO₂), which results in the direct production of syngas (CO/H₂) in a process known as dry reforming of methane (DRM). DRM does aid in soot suppression at lower CH₄ fractions, albeit with the potential formation of other unwanted products such as water. In addition to this, higher CH₄ fractions still result in carbon deposition, eventually destabilizing and disrupting the plasma discharge (and hence the potential continuous operation of the process).

There exists a need in industry for improved methods, reactors and reactor systems that solve the above-cited problems.

### Summary of the disclosure

It is an objective of the present disclosure to provide a method according to claim 1, and to provide associated reactors and reactor systems.

In a first aspect of the present disclosure, a method is disclosed for plasma-based conversion of methane in a plasma reactor, the plasma reactor comprising a reaction chamber and an energy source to create the plasma in the reaction chamber, the reaction chamber being fluidly connected to a post-plasma reaction chamber, the plasma reactor comprising a gas inlet, the post-plasma reaction chamber comprising a gas outlet. The method comprises:
a) generating a, preferably continuous, plasma in the reaction chamber by activating the energy source;
b) providing a first gas flow comprising a CH₄ component through the gas inlet and into the reaction chamber, allowing conversion of the CH₄ component (at least to a large extent, for instance between 40 and 100%, or between 80 and 100%) into gaseous H₂ and solid carbon and allowing the continuous removal of produced H₂ through the post-plasma reaction chamber and through the gas outlet;
c) in consideration of, or as a function of, a solid carbon deposit being formed on a predetermined portion of an inner wall of the post-plasma reaction chamber, replacing the first gas flow with a second gas flow, the second gas flow comprising a COz component, allowing the oxidation of the deposited carbon, and allowing the continuous removal of produced CO through the gas outlet until the deposited carbon is substantially removed (e.g. on at least the predetermined portion of the inner wall).

To solve the issue of carbon deposition disrupting the process continuity of CH₄ conversion in plasma reactors, embodiments of the present disclosure establish an innovative looping system, wherein a pure CO₂ or low CH₄ fraction DRM mixture is activated once a sufficient amount of solid carbon has been formed. This process simply switches the discharge gas within the same reactor and provides the advantage of reducing the downtime of the reactor required for cleaning.

The reaction chamber and post-plasma reaction chamber are preferably connected by means of a fluid connection, or instance defined by an opening or open tube arranged in a common separation wall between the reaction chamber and post-plasma reaction chamber.

The predetermined portion of the inner wall of the post-plasma reaction chamber can be a portion of the inner side of the outer wall of the post-plasma reaction chamber but can be defined on a separate structure arranged or positioned within the internal volume of the post-plasma reaction chamber. The separate structure or predetermined portion thereof can for instance comprise a web or grid structure arranged within substantial alignment with the fluid connection, such that, preferably, most (for instance more than 50%, or more than 60%, or more than 70%, or more than 80%, or more than 90%) of the gas flow flowing from the reaction chamber into the post-plasma reaction chamber is passing through it. Preferably, such a separate structure allows gas flow to go through when no or only a limited amount of solid carbon is deposited thereon.

In preferred embodiments, the separate structure comprises a grid or web structure that is arranged within the post-plasma reaction chamber and provides a closed connection between the fluid connection's outlet and the grid or web structure, such that most (more than 95% or more than 99%) or all of the gas flow flowing from the reaction chamber into the post-plasma reaction chamber is obliged to pass through it. In such embodiments, a differential pressure increase over the bed, grid or web structure may occur during solid carbon loading, a parameter which can be a measure of the amount of solid carbon being deposited.

According to preferred embodiments, the method comprises repeating steps (b) and (c) alternatingly, to alternatingly replace the first gas flow with the second gas flow and vice versa.

This process provides the advantage of further reducing the downtime of the reactor required for cleaning. It is a further advantage that the reaction chamber and the post-reaction chamber do not strictly need to be separable and could be permanently fixed to one another. Also, if the reaction chamber and the post-reaction chamber are separable, they need to be separated less frequently.

According to preferred embodiments, the method comprises detecting or measuring an amount of the carbon being deposited in the post-plasma reaction chamber during step (b) and switching to step (c) if the solid carbon amount reaches, or reaches above a first predetermined threshold value.

According to preferred embodiments, the amount of carbon being deposited in the post-plasma reaction chamber is an amount being deposited at a predetermined location of maximal deposit, such as for instance at a bed, web or grid structure.

According to preferred embodiments, measuring the amount of carbon deposited can comprise optical or electrical measurements, or can comprise determining a differential pressure measurement over a bed, web or grid that is loaded with solid carbon in step (b) and cleaned from solid carbon in step (c).

In embodiments comprising an optical measurement or visual or optical inspection, the post-plasma reaction chamber may comprise a transparent window in a sidewall thereof. For instance, such a window can be placed in a sidewall of the post-plasma reaction chamber opposite the common sidewall and can for instance extend within the angular range of 30° to 60° with respect to the longitudinal axis of the plasma reactor, defined with respect to a central portion of the distal end (most central end) of the bed, grid or web structure. Alternatively, such a transparent window can for instance be provided in a sidewall of the post-plasma reaction chamber adjacent to the common wall between the reaction chamber and post-plasma reaction chamber and can for instance extend within the angular range of 30° to 60° with respect to the longitudinal axis of the plasma reactor, defined with respect to a central portion of the distal end (most central end) of the bed, grid or web structure.

According to preferred embodiments, the method comprises measuring a concentration of an O₂ component in the gas outlet and switching to step (b) if the O₂ concentration reaches a second predetermined threshold value.

According to preferred embodiments, the at least one replacing of one of a first and a second gas flow with the other one of the first and the second gas flow is performed in a gradual manner, for instance by continuously or stepwise increasing and decreasing respective components. In such embodiments, during a transition phase, respective components of the first and second gas can be fed into the reactor at the same time, for a short period of time (for instance for less than 1 minute, or less than 45 or less than 30 seconds).

It is an advantage that, for instance in case of plasma discharge, no shut-down and reignition of the reactor is required and the reactor can perform continuously and without being interrupted. This reduces overall down-time of the reactor and increases efficiency. In certain embodiments, the first and second gas flows can be mixed (e.g. by a mixing means) during the transition phase.

According to preferred embodiments, the at least one replacing of one of a first and a second gas flow with the other one of the first and the second gas flow is performed in a discontinuous or discrete manner. For instance, the first gas flow can be switched off completely at the same time that the second gas flow is switched on. This allows for a clear separation of product gas flows. In such embodiments, the plasma may be extinguished when the first gas flow is switched off and reignited when the second gas flow is switched on.

According to preferred embodiments, the plasma reaction chamber has an internal volume within the range of 5 cm³ to 5000 cm³.

According to preferred embodiments, the post-plasma reaction chamber has an internal volume within the range of 1 cm³ to 1000 cm³.

According to preferred embodiments, the method allows a gas flow throughput within the range of 1 L/min to 100 L/min, and utilizes a plasma or energy source having a power output within the range of 0.1 kW to 50 kW.

According to preferred embodiments, a specific energy input of the reactor is within the range of 1 to 10 kJ/L, more preferably 4 to 10 kJ/L during step (b). Preferably, it is larger than 4 kJ/L during step (c).

According to preferred embodiments, the CH₄ component in the first gas flow is within the range of 10% to 100%, more preferably within the range of 50% to 100%.

According to preferred embodiments, the first gas flow further comprises an inert gas (e.g. Ar/He) and/or a co-reactant gas (e.g. CO₂ to enable "dry-reforming of methane").

In some embodiments only an inert gas is added to the CH₄ component in the first gas flow (and no co-reactant gas). The inert gas component is then complementary to the CH₄ component (i.e. constitutes 100% minus the CH₄ component). Preferably, the inert gas component is smaller than 95% or smaller than 75%, or smaller than 50% or more preferably smaller than 25%, even more preferably smaller than 5%.

In some embodiments only a co-reactant gas is added to the CH₄ component in the first gas flow (and no inert gas gas). The co-reactant gas component is then complementary to the CH₄ component. Preferably, the co-reactant gas component is smaller than 75%, more preferably smaller than 50%, even more preferably smaller than 25%.

In some embodiments both inert gas and co-reactant gas are added to the CH₄ component. Preferably, their combined presence is smaller than 95% or smaller than 75%, or smaller than 50% or more preferably smaller than 25%, even more preferably smaller than 5%. Preferably, the inert gas component concentration is larger than the co-reactant component concentration.

According to preferred embodiments, the CO₂ component in the second gas flow is within the range of 1% to 100%, 1% to 99%, 60% to 100%, 60% to 99%, 80% to 100%, or 80% to 99%.

According to preferred embodiments, the second gas flow further comprises an inert gas (e.g. Ar/He) and/or a co-reactant such as CH4 in a lower fraction (i.e. less than 50%).

In some embodiments only an inert gas is added to the CO₂ component in the second gas flow (and no co-reactant gas). The inert gas component is then complementary to the CO₂ component. Preferably, the inert gas component is smaller than 95% or smaller than 75%, or smaller than 50% or more preferably smaller than 25%, even more preferably smaller than 5%.

In some embodiments only a co-reactant gas is added to the CO₂ component in the second gas flow (and no inert gas gas). The co-reactant gas component is then complementary to the CO₂ component. Preferably, the co-reactant gas component is smaller than 50%, more preferably smaller than 25%, even more preferably smaller than 5%.

In some embodiments both inert gas and co-reactant gas are added to the CO₂ component. Preferably, their combined presence is smaller than 95% or smaller than 75%, or smaller than 50% or more preferably smaller than 25%, even more preferably smaller than 5%. Preferably, the CO₂ component concentration is larger than the co-reactant component concentration. According to preferred embodiments, a temperature of the post-plasma reaction chamber is within the range of 700 °C to 6000 °C, more preferably between 1200°C and 6000°C during all or most of step (c). This allows a process known as the reverse Boudouard reaction to take place (CO₂+C 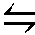 2CO).

According to preferred embodiments, a temperature of the reaction chamber is within the range of 700°C to 10000 °C, more preferably within the range of 1000°C to 10000°C more preferably within the range of 2000°C to 8000°C, more preferably within the range of 6000°C to 8000°C.

According to preferred embodiments, the plasma is of a thermal or quasi-thermal type.

According to preferred embodiments, the switching frequency between providing the first and second gas flows is within the range of 1/day and 1/minute, more preferably between 2/hour to 10/hour.

The typical time periods for the provisioning of the first gas flow and the second gas flow can depend on the flow rate for the respective gas flows.

For instance, if the flow rate of the first gas flow is about equal to the flow rate of the second gas flow, the duration of the second step is preferably shorter than the duration of the first step of the process.

For instance, if the flow rate of the first gas flow is smaller than the flow rate of the second gas flow, the duration of the second step is preferably shorter than the duration of the first step times the ratio of first gas flow rate over the second gas flow rate.

For instance, if the flow rate of the first gas flow is larger than the flow rate of the second gas flow, the duration of the second step is preferably shorter than the duration of the first step times the ratio of second gas flow rate over the first gas flow rate.

In a second aspect of the present disclosure, a plasma reactor is disclosed comprising a reaction chamber having a gas inlet, a post-plasma reaction chamber fluidly connected to the reaction chamber, the post-plasma reaction chamber comprising a gas outlet and an energy source to create the plasma in the reaction chamber, the plasma reactor further comprising a means for measuring an amount of carbon deposited in a predetermined portion of an inner wall of the post-plasma reaction chamber.

According to preferred embodiments, the predetermined portion of the inner wall of the post-plasma reaction chamber is embodied as or on a separate structure arranged or positioned within the internal volume of the post-plasma reaction chamber.

According to preferred embodiments, the separate structure or predetermined portion thereof can for instance comprise a bed, web or grid structure arranged within substantial alignment with a fluid connection between the plasma reaction chamber and the post-plasma reaction chamber, for instance along the longitudinal axis of the plasma reactor, and for instance (defining a plane) perpendicular on the longitudinal axis.

Preferably, the separate structure is arranged and adapted such that most (for instance more than 50%, or more than 60%, or more than 70%, or more than 80%, or more than 90%, or more than 95%) of a gas flow flowing from the reaction chamber into the post-plasma reaction chamber would have to pass through it.

Preferably, the separate structure is suitable for allowing gas flow to go through when no or only a limited amount of solid carbon is deposited thereon (for instance when less than 50% of the open volume of the bed, grid or web is occupied), and suitable for collecting solid carbon particles from the first gas flow.

In preferred embodiments, the separate structure comprises a web, grid or web structure that is arranged within the post-plasma reaction chamber and provides a closed connection between the fluid connection's outlet and the grid or web structure, such that most (more than 95% or more than 99%) or all of the gas flow flowing from the reaction chamber into the post-plasma reaction chamber is obliged to pass through it.

According to preferred embodiments, the post-plasma reaction chamber comprises a differential pressure sensor arranged and adapted for measuring a pressure difference over the bed, web or grid structure, i.e. between opposed sides of the bed, web or grid structure.

According to preferred embodiments, the support structure comprises comprise lateral bypass openings in the sidewalls of the support structure arranged parallel to the reactor's longitudinal axis to allow a small amount of gas flow to bypass the bed, grid or web structure, for instance to allow pressure release when the bed, grid or web structure becomes clogged or substantially clogged.

According to preferred embodiments, the reactor further comprising a means for measuring an O₂ concentration of a gas flow passing through the gas outlet.

According to preferred embodiments, the reactor is of a thermal or quasi thermal plasma type.

According to preferred embodiments, the reaction chamber and the post-plasma reaction chamber are fixedly connected.

According to preferred embodiments, the post-plasma reaction chamber comprises a transparent window.

In a third aspect of the present disclosure, a system for plasma-based conversion of methane is disclosed comprising a plasma reactor according to any of the embodiments of the second aspect, which further comprises a means for providing a gas flow to the inlet, a means for switching between providing a first gas flow comprising CH₄ and providing a second gas flow comprising CO₂ at the inlet and a control unit for controlling the means for switching to switch, preferably continuously, preferably repeatedly, between providing the first flow of gas and providing the second flow of gas based on or at least on the measured amount of carbon deposited and/or the O₂ concentration measured at the gas outlet.

According to preferred embodiments, the system comprises a first, inlet tube system comprising a first set of one or more valves to control the flow of respective gas flows towards the gas inlet.

According to preferred embodiments, the system comprises a second, outlet tube system comprising a second set of one or more valves fluidly connected to the gas outlet. For instance, the second, outlet tube system may comprise a switching valve directing the outlet gas flow (for instance the first and second gas flow respectively) towards first and second subsystems of the outlet tube system.

According to preferred embodiments the first and second set of valves are controlled by the control unit.

According to preferred embodiments, the control unit is adapted for controlling the movement of the first and second set of valves in a synchronized manner.

Features and advantages disclosed for one of the above aspects of the present disclosure are hereby also implicitly disclosed for the other aspects, mutatis mutandis, as the skilled person will recognize. For instance, features disclosed for the method are considered to be also disclosed for the reactor and system, the latter comprising means or being arranged and/or adapted to perform the corresponding method step.

When, in the present disclosure, gas flow components are expressed as percentages of a respective gas flow, these are supposed to be in volume percent (volume %).

### Brief description of the drawings

The disclosure will be further elucidated by means of the following description and the appended figures.
Fig. 1 illustrates a system and a first state of a method according to embodiments of the present disclosure.
Fig. 2 illustrates the same system as in Fig. 1 and a second state of a method according to embodiments of the present disclosure.
Fig. 3 illustrates an embodiment wherein a window is provided in the post-plasma reaction chamber for optical measurement or inspection of the deposited carbon.

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

To solve the issue of carbon deposition disrupting the process continuity of CH₄ conversion in plasma reactors, the current disclosure establishes an innovative looping system, wherein a pure CO₂ or low CH₄ fraction DRM mixture is activated once a sufficient amount of solid carbon 3 has been formed. This process switches the discharge gas within the same reactor, reducing the downtime of the reactor required for cleaning.

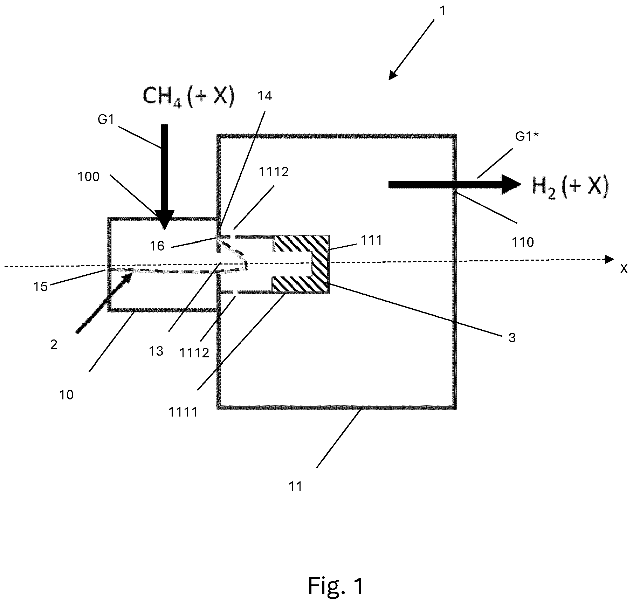

Fig. 1 illustrates a plasma reactor 1 according to embodiments of the present disclosure. The plasma reactor 1 comprises a reaction chamber 10 and an energy source 12 to create a plasma 2 in the reaction chamber 10.

The reaction chamber comprises a gas inlet 100 for feeding an incoming gas flow into the reaction chamber 10.

The reaction chamber is (fluidly) connected to a post-plasma reaction chamber 11 by means of a fluid connection 13, which comprises for instance an opening in a common separating wall or tube or similar structure.

The post-plasma reaction chamber 11 comprises a gas outlet 110 to allow removal of the gas from the reactor. The gas is led from the inlet 100 to the outlet 110 of the plasma reactor 1.

In alignment or substantial alignment with the outlet of the fluid connection 13, for instance along the longitudinal axis of the plasma reactor, the post-plasma reaction chamber 11 comprises a bed, web or grid structure 111, such that most or all of the gas flowing from reaction chamber 10 to post-plasma chamber 11 flows through the bed, web or grid structure 111. The bed, grid or web structure can for instance extend along a plane. Such plane is preferably arranged perpendicularly on the longitudinal axis. Preferably, the reactor comprises a fixed bed attached directly to the end of the discharge zone, as shown in Figure 1. The discharge zone can be seen as the area of the reactor wherein the plasma is created due to electrical breakdown of the gas and then sustained by the power supply unit.

The bed, web or grid structure 111 is for instance supported by a support structure 1111 arranged between the inner sidewalls of the post-plasma reaction chamber and the bed, web or grid structure. This support structure 1111 can provide a closed or substantially closed connection between the fluid connection's outlet and the bed, grid or web structure 111, such that most (more than 95% or more than 99%, or 99,9%, or 100%) or all of the gas flow flowing from the reaction chamber into the post-plasma reaction chamber is obliged to pass through it. In such embodiments, a differential pressure increase over the bed, grid or web structure may occur during material loading of the structure, which would reduce the average opening or pore diameter in the bed, web or grid structure, or close the pores or openings completely. A differential pressure over the structure 111 is a preferred parameter as a measure of the amount of material (here solid carbon 3, see below) being deposited on the structure 111. The support structure 1111 may comprise lateral bypass openings 1112 in the sidewalls of the support structure 1111 arranged parallel to the reactor's longitudinal axis to allow a small amount of gas flow to bypass the bed, grid or web structure 111, for instance to allow pressure release when the bed, grid or web structure 111 becomes clogged or substantially clogged.

A plasma 2 is generated in the reaction chamber 10 by activating said energy source 12, whereby a sufficiently large potential difference between two electrodes in the reaction chamber 10 is applied. For instance, a first electrode 15 can be provided at a wall of the plasma reaction chamber 10 opposite to the common sidewall 14. A second electrode 16 can be provided at the common sidewall 14, in the plasma reaction chamber 10, for instance close to or adjacent the opening or fluid connection 13. Suitable electrical isolation means or structures are provided to the reaction chamber 10 to isolate the first and second electrodes 15 and 16 from the sidewalls of the reaction chamber 10. Alternatively, the plasma 2 can be generated by microwave (MW) or radio frequency (RF) electromagnetic waves or by an alternating magnetic field (i.e. electromagnetic induction).

A first gas flow G1 is provided in this step through the gas inlet 100 and into the reaction chamber 10. The first gas comprises pure CH₄ or CH₄ combined with a secondary gas. The secondary gas may be inert (e.g. Ar) or oxidizing (e.g. CO₂), but should not, or not entirely, suppress the formation of soot (e.g. does not comprise any of H₂, H₂O, O₂), as this would jeopardize the second step of the process. Hereby conversion of the CH₄ component into gaseous H₂ and solid carbon 3 occurs. A continuous removal of produced H₂ through the post-plasma reaction chamber 11 and through said gas outlet 110 is taking place.

After a while solid carbon 3 deposit in being formed on a predetermined portion of the inner wall of the post-plasma reaction chamber 11, here the bed, web or grid structure 111. In this fixed bed, the solid carbon 3 produced during the decomposition of CH₄ is accumulated. Preferably, most of the solid carbon 3 is captured, for instance more than 50%, or more than 75% or more than 99%. The more solid carbon 3 that is captured, the more efficient the process will be. The plasma utilized in this first step may be non-thermal ("cold") (i.e. all temperature components of the system are not equal, e.g. Tₑ>Tᵥ>T_{g} wherein Tₑ is the electron temperature, Tᵥ is the vibrational temperature and T_{g} is the gas temperature), quasi-thermal ("warm") (i.e. some temperature components of the system are not equal, e.g. Tₑ>T_{g}=Tᵥ wherein Tᵥ is the vibrational temperature, Tₑ is the electron temperature and T_{g} is the gas temperature) or thermal (i.e. all temperature components of the system are equal, e.g. Tₑ=T_{g}=Tᵥ wherein Tᵥ is the vibrational temperature, Tₑ is the electron temperature and T_{g} is the gas temperature). Preferably, the discharge in the first stage is "warm" or thermal, as this type is more favorable for the second stage (see below) and would enable a single power supply for both stages.

In consideration of a solid carbon 3 deposit being formed on this predetermined portion of an inner wall of said post-plasma reaction chamber 11, the first gas flow G1 is replaced with a second gas flow G2 in a second step. This can be performed in a discontinuous or discrete manner (direct switch, from 100% first gas flow G1/G2 to 100% second gas flow G2/G1) or in a gradual manner, for instance by continuously or stepwise decreasing/increasing the respective flows.

The formation of carbon deposit can be measured by means of an increase in differential pressure over the bed, grid or web. Alternatively, electrical of optical measurements, or visual or optical inspection can be used. The measured values can be mapped to corresponding thicknesses of a deposited carbon layer in a predetermined area. For instance, a first threshold value or thickness T1 can be used to trigger the second step.

The second gas flow G2 comprises a CO₂ component, allowing the oxidation of the deposited carbon. Continuous removal of produced CO through the gas outlet 110 is then allowed to take place until the deposited carbon is removed or substantially removed (for instance until more than 80%, or more than 90%, or more than 95%). In this second step, carbon dioxide (CO₂) plasma 2 thus reacts with the solid carbon 3 produced in the first step to remove oxygen O₂ from the effluent and boost CO production. In some embodiments, a full removal of the deposited carbon may not be needed as it may perform sub-optimal and may reduce overall process efficiency. For instance, only 80 to 90% of the deposited carbon can be removed in the second step.

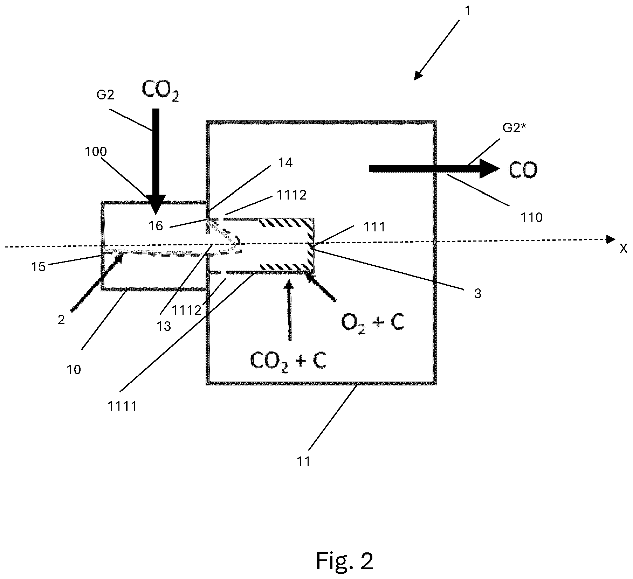

In this second step, the same reactor and bed, web or grid 111 are used, but the discharge gas is changed, illustrated in Fig. 2. This provides the advantage that parts of the reactor do not need to be dismounted, replaced or cleaned.

A pure CO₂ discharge is thereby created within the reactor domain by continuing the application of a large potential difference between the electrodes (or constant application of microwave or radio frequency electromagnetic waves, or constant electromagnetic induction). For instance, the process gas can be changed in a gradual, continuous manner by decreasing the CH₄ fraction while simultaneously increasing the CO₂ content until no CH₄ remains. This process can be advantageous in case a production of syngas is intended.

Alternatively, the plasma power supply 12 can be turned off, gases can be switched and a reignition can take place in pure CO₂. The elected or preferred method can depend on factors such as power supply characteristics, ignition protocols, etc. The latter process can be advantageous when a clear separation of the outlet gas streams (G1*, G2*) is required.

The discharge leads to the oxidation of the deposited carbon via the following reactions:

O₂+2C 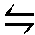 2CO (R1)

O+C 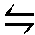 CO (R2)

CO₂+C 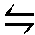 2CO (R3)

Reaction R1 utilizes the molecular oxygen (O₂) formed during CO₂ plasmolysis and should occur as long as the distance between the end of the discharge (e.g. extreme axial end of an arch (last place where to find free electrons and plasma) and the carbon deposit is not too long (for instance smaller than 5 cm, more preferably smaller than 1 cm; otherwise recombination with CO will dominate and the O₂ will reform CO₂).

The reaction of atomic oxygen (O) with the solid carbon 3, R2, is possible as long as the discharge is close enough to the solid carbon 3, for instance at a distance smaller than 10 mm, or smaller than 5 mm (recombination of O into O₂ is on the spatial order of several mm at atmospheric pressure).

Reaction R3, known as the reverse Boudouard reaction, occurs at elevated temperatures (> 1000°C), so preferably a quasi-thermal or thermal plasma will be used in the second stage.

At a certain moment in time, when enough solid carbon 3 will have been removed from the bed, grid or web structure 111, and again a switch is made from gas flow G2 to gas flow G1.

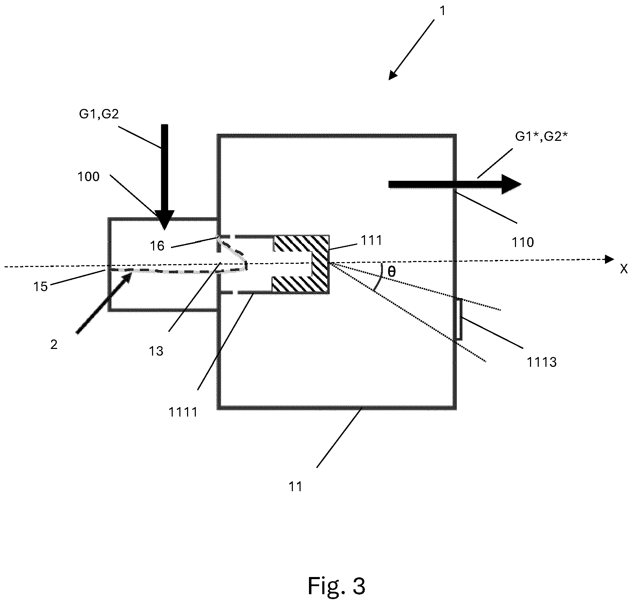

For instance, the oxygen concentration in the outlet gas flow G2* can be measured or monitored, and a switch from second gas flow G2 to second gas flow G1 can be performed when a second threshold T2 of the oxygen concentration in the outlet gas flow is reached. Alternatively, the differential pressure over the bed, grid or web structure 111 can be monitored and when this differential pressure reaches below a predetermined third threshold T3, the switch can be performed. Still alternatively, optical or electrical measurements can be performed to trigger this switch. In the case of optical measurements, the post-plasma reaction chamber 11 may comprise a window 1113 (see Fig. 3) providing optical access to the post-plasma reaction chamber. In still alternative embodiments a combination can be made of any of the beforementioned gas flow switching trigger means.

In case a transparent window 1113 is provided for an optical measurement or visual or optical inspection, the window is preferably placed in a sidewall of the post-plasma reaction chamber such that the deposited carbon is optically or visually accessible. For instance, the window can be arranged opposite the common sidewall, and can extend within the angular range of θ between 30° to 60° with respect to the longitudinal axis of the plasma reactor, the angle θ defined with respect to a central portion of the distal end (most central end) of the bed, grid or web structure 111.

Depending on the desired products, the effluent from the two stages (gas flow G1* and gas flow G2*) can either be combined or kept separate. If pure CH₄ or CH₄ diluted with an inert gas is used, then the effluent will be H₂ (or H₂ with an inert gas and/or co-reactant gas), possibly with some remainder of unconverted CH₄. If a DRM mixture is used at this initial stage, a syngas mixture will be produced. The second stage will produce an oxygen free CO/CO₂ mixture, which can be separated using PSA (or a similar technology) to the constituent components. This can either be combined with the H₂ or syngas produced in the first stage to increase the syngas yield.

In order to provide the respective gas flows G1 and G2, and optionally a combination thereof during a transition phase, to the inlet 100 of the plasma reactor 1, the system 1000 may comprise one or more valves 5 to control the respective gas flows.

In embodiments where a clear gas separation is required between the respective gas flows G1*, G2* at the gas outlet 110, further valves may be provided in an outlet tube system (not depicted) fluidly connected to the gas outlet 110. For instance, the outlet tube system may comprise a switching valve 5 directing the outlet gas flow towards first and second subsystems of the outlet tube system. This is preferably performed in a synchronized manner, i.e. at corresponding moments in time, with the switching of the respective inlet gas streams. The system 1000 can comprise a control unit 6 for controlling the respective valves accordingly. This can result in lower downstream gas separation costs.

The following could for instance be claimed:
1. A method for plasma-based conversion of methane in a plasma reactor (1), said plasma reactor (1) comprising a reaction chamber (10) and an energy source (12) to create the plasma (2) in said reaction chamber (10), said reaction chamber (10) being fluidly connected to a post-plasma reaction chamber (11), said plasma reactor (1) comprising a gas inlet (100), said post-plasma reaction chamber (11) comprising a gas outlet (110), the method comprising:
   a) Generating a, preferably continuous, plasma (2) in said reaction chamber (10) by activating said energy source (12);
   b) Providing a first gas flow (G1) comprising a CH4 component through said gas inlet (100) and into said reaction chamber (10), allowing conversion of said CH₄ component into gaseous H₂ and solid carbon and allowing the continuous removal of produced H₂ through said post-plasma reaction chamber (11) and through said gas outlet (110);
   c) in consideration of a solid carbon deposit being formed on a predetermined portion of an inner wall of said post-plasma reaction chamber (11), replacing said first gas flow (G1) with a second gas flow (G2), said second gas flow comprising a CO₂ component, allowing the oxidation of the deposited carbon, and allowing the continuous removal of produced CO through said gas outlet (110) until said deposited carbon is substantially removed.
2. A method according to item 1, comprising repeating steps (b) and (c) alternatingly, to alternatingly replace the first gas flow (G1) with the second gas flow (G2) and vice versa.
3. A method according to item 2, further comprising detecting or measuring an amount of said carbon being deposited in said post-plasma reaction chamber (11) during step (b) and switching to step (c) if said carbon amount reaches a first predetermined threshold value (T1).
4. A method according to item 3, wherein said amount of carbon (3) being deposited in said post-plasma reaction chamber (11) is an amount being deposited at a predetermined location of maximal deposit, such as for instance at a bed, web or grid structure (111).
5. A method according to any of the previous items, further comprising measuring a concentration of an O₂ component in said gas outlet (110) and switching to step (b) if said O₂ concentration reaches a second predetermined threshold value (T2).
6. A method according to any of the previous items, wherein said at least one replacing of one of a first and a second gas flow (G1, G2) with the other one of the first and the second gas flow (G2, G1) is performed in a gradual, for instance continuous or stepwise, manner.
7. A method according to any of the previous items, wherein said at least one replacing of one of a first and a second gas flow (G1, G2) with the other one of the first and the second gas flow (G2, G1) is performed in a discontinuous manner.
8. A method according to any of the previous items, allowing a gas flow throughput within the range of 1 L/min to 100 L/min, and having a plasma or energy source having a power output within the range of 0.1 kW to 50 kW.
9. A method according to any of the previous items, wherein a specific energy input is within the range of 1 to 10 kJ/L, more preferably 4 to 10 kJ/L during step (b) and is larger than 4 kJ/L during step (c).
10. A method according to any of the previous items, wherein said CH₄ component in said first gas flow (G1) is within the range of 10% to 100%, more preferably within the range of 50% to 100%.
11. A method according to any of the previous items, wherein said first gas flow (G1) further comprises an inert gas and/or a co-reactant gas.
12. A method according to any of the previous items, wherein said CO₂ component in said second gas flow (G2) is within the range of 1% to 100%
13. A method according to item 11, wherein said second gas flow (G2) further comprises an inert gas and/or co-reactant such as CH₄ in a lower fraction.
14. A method according to any of the previous items, wherein a temperature of said post-plasma reaction chamber (11) is within the range of 700 °C to 6000 °C, more preferably between 1200°C and 6000°C during all or most of step (c).
15. A method according to any of the previous items, wherein a temperature of said reaction chamber (10) is within the range of 700°C to 10000 °C, more preferably within the range of 1000°C to 10000°C, more preferably within the range of 2000°C to 8000°C, more preferably within the range of 6000°C to 8000°C.
16. A method according to any of the previous items, wherein said plasma (2) is of the thermal or quasi-thermal type.
17. A plasma reactor (1) comprising a reaction chamber (10) having a gas inlet (100), a post-plasma reaction chamber (11) fluidly connected to said reaction chamber (10), said post-plasma reaction chamber (11) comprising a gas outlet (110) and an energy source (12) to create the plasma (2) in said reaction chamber (10), the plasma reactor (1) further comprising a means (112) for measuring an amount of carbon deposited in a predetermined portion of an inner wall of said post-plasma reaction chamber.
18. A plasma reactor according to item 17, further comprising a means for measuring an O₂ concentration (113) of a gas flow passing through said gas outlet (110).
19. A plasma reactor (1) according to item 17 or 18, of the thermal or quasi thermal plasma type.
20. A plasma reactor (1) according to any of items 17 to 19, wherein said reaction chamber (10) and said post-plasma reaction chamber (10) are fixedly connected.
21. A system (100) for plasma-based conversion of methane comprising a plasma reactor (1) according to any of items 17 to 20, further comprising a means for providing a gas flow to said inlet (4), a means (5) for switching between providing a first gas flow (G1) comprising CH₄ and providing a second gas flow (G2) comprising CO₂ at said inlet (100) and a control unit (6) for controlling said means for switching (5) to switch, preferably continuously, preferably repeatedly, between providing said first flow of gas (G1) and providing said second flow of gas (G2) based on or at least on said measured amount of carbon deposited (3) and/or said O₂ concentration measured at said gas outlet (110).

**Table of reference numbers.**

| | |
|---|---|
| Plasma reactor | 1 |
| Reaction chamber | 10 |
| Gas inlet | 100 |
| System | 1000 |
| Post-plasma reaction chamber | 11 |
| Gas outlet | 110 |
| Bed, web or grid structure | 111 |
| Support structure | 1111 |
| Bypass openings | 1112 |
| Window | 1113 |
| Deposited Carbon measurement means | 112 |
| O2 concentration measurement means | 113 |
| Energy source | 12 |
| Fluid connection | 13 |
| Common separation wall | 14 |
| First electrode | 15 |
| Second electrode | 16 |
| Plasma | 2 |
| Deposited carbon | 3 |
| Means for providing gas flow to inlet | 4 |
| Gas flow switching means | 5 |
| Control unit | 6 |
| First gas flow | G1 |
| Second gas flow | G2 |
| First outlet gas flow | G1* |
| Second outlet gas flow | G2* |
| First predetermined threshold value | T1 |
| Second predetermined threshold value | T2 |
| Third predetermined threshold value | T3 |
| Longitudinal axis | X |

## Claims

1. A method for plasma-based conversion of methane in a plasma reactor (1), said plasma reactor (1) comprising a reaction chamber (10) and an energy source (12) to create the plasma (2) in said reaction chamber (10), said reaction chamber (10) being fluidly connected to a post-plasma reaction chamber (11), said plasma reactor (1) comprising a gas inlet (100), said post-plasma reaction chamber (11) comprising a gas outlet (110), the method comprising:
a) Generating a, preferably continuous, plasma (2) in said reaction chamber (10) by activating said energy source (12);
b) Providing a first gas flow (G1) comprising a CH4 component through said gas inlet (100) and into said reaction chamber (10), allowing conversion of said CH₄ component into gaseous H₂ and solid carbon and allowing the continuous removal of produced H₂ through said post-plasma reaction chamber (11) and through said gas outlet (110);
c) in consideration of a solid carbon deposit being formed on a predetermined portion of an inner wall of said post-plasma reaction chamber (11), replacing said first gas flow (G1) with a second gas flow (G2), said second gas flow comprising a COz component, allowing the oxidation of the deposited carbon, and allowing the continuous removal of produced CO through said gas outlet (110) until said deposited carbon is substantially removed.

2. A method according to claim 1, comprising repeating steps (b) and (c) alternatingly, to alternatingly replace the first gas flow (G1) with the second gas flow (G2) and vice versa.

3. A method according to claim 2, further comprising detecting or measuring an amount of said carbon being deposited in said post-plasma reaction chamber (11) during step (b) and switching to step (c) if said carbon amount reaches a first predetermined threshold value (T1).

4. A method according to claim 3, wherein said amount of carbon (3) being deposited in said post-plasma reaction chamber (11) is an amount being deposited at a predetermined location of maximal deposit, such as for instance at a bed, web or grid structure (111).

5. A method according to any of the previous claims, further comprising measuring a concentration of an O₂ component in said gas outlet (110) and switching to step (b) if said O₂ concentration reaches a second predetermined threshold value (T2).

6. A method according to any of the previous claims, wherein said at least one replacing of one of a first and a second gas flow (G1, G2) with the other one of the first and the second gas flow (G2, G1) is performed in a gradual, for instance continuous or stepwise, manner.

7. A method according to any of the previous claims, wherein said at least one replacing of one of a first and a second gas flow (G1, G2) with the other one of the first and the second gas flow (G2, G1) is performed in a discontinuous manner.

8. A method according to any of the previous claims, allowing a gas flow throughput within the range of 1 L/min to 100 L/min, and having a plasma or energy source having a power output within the range of 0.1 kW to 50 kW.

9. A method according to any of the previous claims, wherein a specific energy input is within the range of 1 to 10 kJ/L, more preferably 4 to 10 kJ/L during step (b) and is larger than 4 kJ/L during step (c).

10. A method according to any of the previous claims, wherein said CH₄ component in said first gas flow (G1) is within the range of 10% to 100%, more preferably within the range of 50% to 100%.

11. A method according to any of the previous claims, wherein said CO₂ component in said second gas flow (G2) is within the range of 1% to 100%.

12. A method according to any of the previous claims, wherein a temperature of said post-plasma reaction chamber (11) is within the range of 700 °C to 6000 °C, more preferably between 1200°C and 6000°C during all or most of step (c).

13. A method according to any of the previous claims, wherein a temperature of said reaction chamber (10) is within the range of 700°C to 10000 °C, more preferably within the range of 1000°C to 10000°C, more preferably within the range of 2000°C to 8000°C, more preferably within the range of 6000°C to 8000°C.

14. A plasma reactor (1) comprising a reaction chamber (10) having a gas inlet (100), a post-plasma reaction chamber (11) fluidly connected to said reaction chamber (10), said post-plasma reaction chamber (11) comprising a gas outlet (110) and an energy source (12) to create the plasma (2) in said reaction chamber (10), the plasma reactor (1) further comprising a means (112) for measuring an amount of carbon deposited in a predetermined portion of an inner wall of said post-plasma reaction chamber.

15. A system (100) for plasma-based conversion of methane comprising a plasma reactor (1) according to claim 14, further comprising a means for providing a gas flow to said inlet (100), a means (5) for switching between providing a first gas flow (G1) comprising CH₄ and providing a second gas flow (G2) comprising CO₂ at said inlet (100) and a control unit (6) for controlling said means for switching (5) to switch, preferably continuously, preferably repeatedly, between providing said first flow of gas (G1) and providing said second flow of gas (G2) based on or at least on said measured amount of carbon deposited (3) and/or said O₂ concentration measured at said gas outlet (110).
